# EUROPEAN PATENT APPLICATION

(11) **EP 3 913 586 A1**
(43) Date of publication of application: **24.11.2021**
(21) Application number: 20176119.4
(22) Date of filing: 22.05.2020
(51) Int. Cl.: G06T 19/00, G06T 7/73

(54) **A METHOD FOR DIGITAL ASTRO-IMAGING AND AN IMAGE SIGNAL PROCESSOR IN A TERMINAL DEVICE**

(71) Applicant: Beijing Xiaomi Mobile Software Co., Ltd., Beijing 100085 (CN)
(72) Inventor: Tuna, Uygar, 33720 TAMPERE (FI); Birinci, Murat, 33720 TAMPERE (FI); Kyrönlahti, Petteri, 33720 TAMPERE (FI); Finnilä, Tapio, 33720 TAMPERE (FI)
(74) Representative: dompatent von Kreisler Selting Werner - Partnerschaft von Patent- und Rechtsanwälten mbB

(57) **Abstract**

Method for digital astro-imaging preferably implemented in a terminal device and comprising the steps of: acquiring image data of a captured image including a sky region, acquiring sky data from the image data, acquiring global positioning information of the terminal device, acquiring motion data of the terminal device, acquiring astronomic feature information, and applying image data synthesis to the image data, the sky data, the global positioning information, the motion data and the astronomic feature information, such that a final image comprising a synthesized sky region is provided.

## Description

### Technical field

The present invention relates to image processing in the field of digital astro-imaging including preferably astronomic photography and astronomic videography, in particular to a method thereof preferably implemented a terminal device with a digital camera sensor, an image signal processor (ISP) to carry out the method and a terminal device comprising such an ISP.

### Background

Astro-imaging, or astronomic imaging, refers to the imaging of astronomical objects, where still images of the astronomic objects and/or videos recording the astronomic objects for a lapsed period of time are captured. Therein, captured astronomic objects include, for instance, planetary systems, stars, star clusters, galaxies and etc. This type of photography and videography can visualize the objects from the space which are invisible to unaided human eyes. In particular, preview modes of the astronomic videography can be provided for the users to preview the recorded videos of the objects in the space.

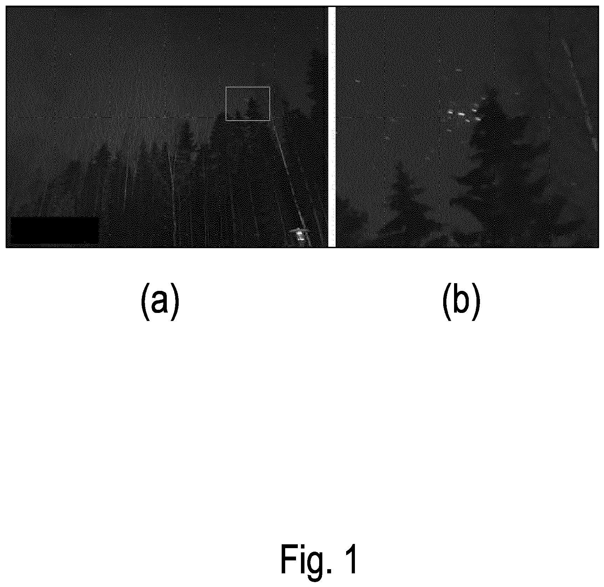

There are two ways of doing astro-imaging. The first way for performing the astro-imaging has been always possible with a professional image capturing setup, including usually a digital single lens reflex (DSLR), a tripod and a tripod-to-earth movement synchronizer to avoid star-trails due to long exposure times (see example star trails in Fig.1(b)). In addition, recently the astro-imaging is gaining more and more popularity in the field of digital imaging. Thus, alternatively, digital camera devices, for instance, a camera phone can be used.

The second way is to use a sky replacement software (SW) as the post processing. This approach requires a dedicated SW as the post processor and usually generates unrealistic and fake astro-imaging contents. Furthermore, just replacing the night sky with a milky way image will become so repetitive and eventually render unwanted attributes if all device users will share night photos or videos with the same, or random sky pattern.

Further, there are several drawbacks for the above-mentioned ways of capturing astronomic images or videos with a DSLR or a camera phone. First of all, there is required a dedicated photo capturing setup including, for instance, a tripod and an earth movement synchronizer. Further, the capture time required can be as long as several minutes. Furthermore, the atmospheric conditions play a role such that only with small atmospheric light pollution and in clear skies (i.e. no clouds) can astro-imaging contents be generated. Additionally, post-processing SW such as Luminar, Adobe Photoshop and etc. is required to achieve wanted output. In this regard, existent software applications installed on the digital camera phones are not performing well enough.

For the reasons listed above, it is hard to bring realistic astro-imaging to the users. Therefore, in order to bring the astronomic imaging to the large smartphone user quantities, there is demanded a method without need for a dedicated setup for the astro-photography and videography nor a post processing SW from the user to improve the final images and videos and thus tackling the aforementioned drawbacks of traditional astro-imaging.

### Summary

It is thus an object of the present invention to provide a method for digital astro-imaging preferably implemented in a terminal device to efficiently generate realistic astro-imaging contents with improved accuracy. Further, it is an object of the present invention to provide an image signal processor (ISP) configured to carry out the steps of the method. Further, it is an object of the present invention to provide a terminal device comprising the ISP.

The problem given above is solved by the method according to claim 1, the ISP according to claim 13 and the terminal device according to claim 14.

The method for digital astro-imaging preferably implemented in a terminal device in accordance with the present invention comprises the steps of: acquiring image data of a captured image including a sky region, preferably from a digital camera sensor comprised in the terminal device, acquiring sky data from the image data, acquiring global positioning information of the terminal device, acquiring motion data of the terminal device, acquiring astronomic feature information which preferably relates to one or more anchor points in the sky, and applying image data synthesis to the image data, the sky data, the global positioning information, the motion data and the astronomic feature information, such that a final image comprising a synthesized sky region is provided. Therein, the image data preferably refers to image pixel data of the captured image and the sky data preferably refers to the data comprised in in the image data, which relates to the sky region in the captured image. Further, the global positioning information preferably relates to the location of the terminal device when the image is captured, whereas the motion data preferably concerns the orientation and pose of the terminal device at the time of capturing the image. Moreover, the one or more anchor points in the sky preferably refer to bright stars or star constellations in the actual night sky. The astronomic feature information preferably refers to the observed characteristics of the night sky and can be acquired from scientific astronomic data in advance. Thus, the astronomic feature information does not necessarily relate to the anchor points in the sky. In addition, as a recorded video of the astronomic objects consists of frames of images, the above-mentioned method of the present invention applies analogously to the imaging processing of a captured video. Thus, final astro-imaging contents provided by the present invention comprises final images for the astro-photography as well as final videos consisting of one or more final images for the astro-videography.

On the basis of the captured image, the sky region comprised in the captured image, the location and orientation of the terminal device and the scientific astronomic data of the night sky, realistic astro-imaging content of the scene are provided to users of the terminal device, e.g., a digital camera device. In particular, observers from different global locations see different portions of the astronomic objects such as Milky Way galaxy which is correctly reproduced by the present invention. Furthermore, as the earth obliquity (i.e. degrees of tilt) is changing around the year, the astronomic objects are also visible from different orientations of the device during the year. Thus, by the image data analysis of the present invention, the location and orientation-dependent information of the terminal device is applied to improve the accuracy of the synthesized sky region in the final image. Moreover, the method of the present invention does not require any complex dedicated setup for the astro-imaging nor any post processing SW from the user and thus improves the efficiency in providing the above-mentioned accurate astro-imaging contents of the scene captured or recorded by the digital camera device.

Preferably, the sky data comprises sky region information relating to the sky region segmented from the captured image. Therein, segmenting the sky region from the captured image preferably refers to discriminating between sky data and none-sky data comprised in the image data. More preferably, the segmentation is conducted on a pixel level. According to the method of present invention, the sky region comprised in the captured image is segmented such that the accuracy of the synthesized sky region comprised in the final image is improved.

Preferably, the sky data further comprises sky feature information relating to one or more captured anchor points in the sky region. Therein, information relating to bright stars or star constellations captured in the image is comprised in the sky feature information. More preferably, the sky feature information comprises pixel data of the captured anchor points. Thus, by acquiring the data that are specifically related to anchor points in the captured image, accuracy of the synthesized sky region comprised in the final image is further improved.

Preferably, the astronomic feature information is acquired from a prerecorded/prestored sky map, wherein the sky map comprises one or more target anchor points corresponding to the sky data and preferably to at least one of the captured anchor points, such that the synthesized sky region is provided based on an on-map sky region comprising the one or more target anchor points. Therein, the sky map is preferably obtained from prestored scientific open source data including, for instance, the Deep Star Maps provided by the National Aeronautics and Space Administration (NASA) and the galactic database released by the European Space Agency (ESA). Further, the on-map sky region refers to a sky region on the sky map and comprising the one or more target anchor points. Thus, by the method of the present invention, the correspondence between the target anchor points and the captured anchor points is applied such that the on-map sky region comprising the one or more target anchor points in the sky map is used by the image data analysis to generate accurate astronomic contents in the final image.

Preferably, the image data synthesis comprises a learning-based algorithm preferably using Generative Adversarial Networks (GANs). Preferably, the learning-based algorithm comprises a learning-based network that is already trained with training image data and thus can provide predictions for the image data of the captured images. Preferably, a GAN is applied which is trained with scientific galaxy images in their original and degraded versions such that the GAN is able to generate final galaxy images with higher accuracy. According to the image data analysis of the present invention, not only the sky data comprised in the captured image but also the location and orientation-dependent information of the device is provided to the learning-based network, such that a final image with a higher accuracy is generated.

Preferably, the global positioning information is acquired from a global navigation satellite system (GNSS). Thus, the global location of the terminal device is obtained with higher accuracy, which further improves the accuracy of the final image.

Preferably, the GNSS comprises at least one of Global Positioning System (GPS), augmented GPS (A-GPS), Global Navigation Satellite System (GLONASS), BeiDou Navigation Satellite System (BDS), the European Union's Galileo (GALILEO) and Quasi-Zenith Satellite System (QZSS).

Preferably, the global positioning information comprises rough localization information acquired from data networks. Therein, data networks preferably refer to communication networks where data is transmitted and received between devices. In particular, in cases where the digital camera device does not have the GNSS type sensors, the method of the present invention can still utilize the rough localization information from the data networks. Thus, with the method of the present invention, accurate final images of the sky can still be provided where the GNSS is not available in the terminal device.

Preferably, the data networks comprise at least one of Global System for Mobile Communications (GSM) networks, Wide Area Networks (WANs), Local Area Networks (LANs) and Internet networks.

Preferably, the motion data comprises pose estimation of the terminal device. Therein, pose of the terminal device preferably comprises position and orientation of the terminal device. As the visible portion of the astronomic objects in the sky depends on the pose of the terminal device, the method of the present invention improves the accuracy of the presented astronomic objects in the final image.

Preferably, the motion data is acquired from an inertial measurement unit (IMU). Pose estimation from IMUs is accurate and fast and thus the method of the present invention improves the efficiency and accuracy in generating the final image.

Preferably, the IMU comprises at least one of accelerometers, gyroscopes, compasses.

Further, the ISP in accordance with the present invention is configured to carry out the steps of the method as described above.

Further, the terminal device in accordance with the present invention comprises the ISP as described above and a digital image sensor connected to the ISP, wherein the digital image sensor acquires the image data and provides the ISP with the image data for further processing.

### Brief description of the drawings

The present invention is further described with reference to the accompanying figures. The figures show:
Fig. 1 an example final image in the prior art where star trails are visible,
Fig. 2 an embodiment of the method in accordance with the present invention,
Fig. 3 a detailed representation of the steps of the method in accordance with Fig. 2,
Fig. 4 another embodiment of the method in accordance with the present invention,
Fig. 5 example final images in accordance with the present invention,
Fig. 6 further example final images in accordance with the present invention, and
Fig. 7 a device in accordance with an embodiment of the present invention.

### Detailed description of the drawings

Fig. 1 shows an example in the prior art where star trails are identifiable in the final image. Therein, Fig. 1(b) presents an enlarged image of the portion delimited by the square in Fig. 1(a). As discussed above, due to the long exposure time induced by the professional image capturing setup, the example final image is of low accuracy especially due to the unwanted trails of stars.

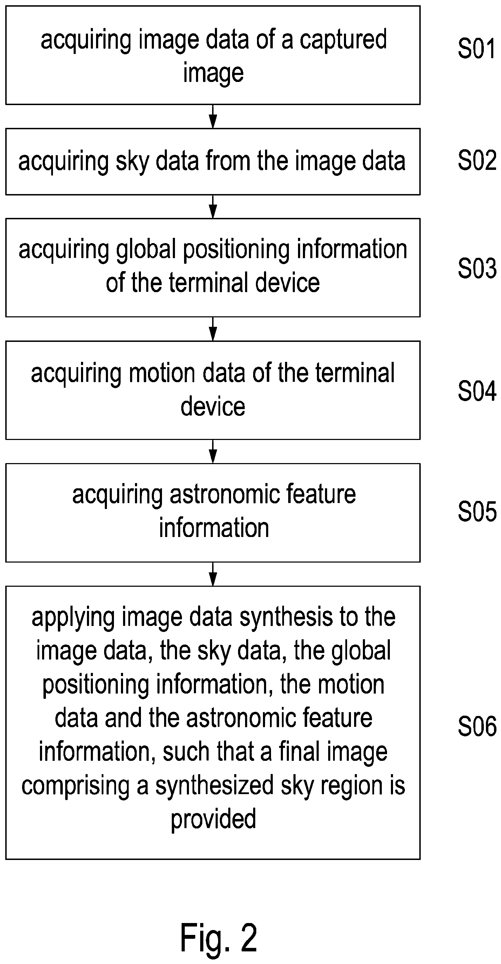

Fig. 2 illustrates a schematic representation of the method in accordance with the present invention. Therein, the method for digital astro-imaging preferably implemented in a terminal device comprises the following steps:
Step S01: acquiring image data of a captured image including a sky region, wherein the image data is preferably acquired from a digital camera sensor comprised in the terminal device,
Step S02: acquiring sky data from the image data,
Step S03: acquiring global positioning information of the terminal device,
Step S04: acquiring motion data of the terminal device,
Step S05: acquiring astronomic feature information, and
Step S06: applying image data synthesis to the image data, the sky data, the global positioning information, the motion data and the astronomic feature information, such that a final image comprising a synthesized sky region is provided.

Further, after Step S01 is completed where a captured image is acquired, Steps S02 to S05 can be carried out simultaneously or separately without limitation as regards the order of execution. Preferably, Steps S02 to S05 are conducted at the same time such that efficiency of the provision of an accurate final image is improved. Thereafter, image data analysis is carried out according to Step S06 such that a final image is provided. Of course, the above-described method can be applied analogously to an astronomic video which comprises frames of images such that by processing the images in similar manner a final video of high accuracy can be provided.

With respect to Steps S01 and S02, the image data and the sky data are preferably in the form of pixels. Pixel data processing of images is well-known in the related field and thus will not be elaborated here.

Referring to Step S03, the global location of the terminal device is acquired and preferably obtained with a Global Navigation Satellite System (GNSS) including GPS, GLONASS and etc., as terminal devices such as smartphones and portable digital camera devices are normally equipped with global positioning sensors. Nevertheless, for terminal devices not having such sensors, rough localization information from the data networks in which the terminal devices are situated can be acquired and used. For instance, communication networks such as GSMs, WANs, LANs and Internet networks can be used to locate a terminal device. Such tracking techniques for mobile devices have been extensively studied in the related field and thus will not be elaborated here.

With respect to Step S04, motion data preferably refers to pose estimation of the terminal device. As is well-known in the art, pose refers to either a combination of position and orientation or merely the orientation of an object. Preferably, the direction information of the terminal device, i.e. to which direction the camera is looking, is also included in the motion data. Thus, according to the present invention, the orientation of the digital camera device is acquired such that the visible portion of the astronomic objects in the night sky is presented in the final image with a higher accuracy. Further, an inertial measurement unit (IMU) is preferably used to obtain the motion data due to its efficiency and insensitiveness to movements of the device. The IMU preferably comprises at least one inertial sensors, namely accelerometers, gyroscopes and compasses, which are known to be of high accuracy. Thus, by the method according to the present invention, the efficiency of providing a final image as well as the accuracy of the final image is further improved.

In Step S05, the astronomic feature information is acquired. There are a number of public sources providing prestored scientific data regarding the astronomic objects in the night sky. For instance, sky maps provided by research institutes can be simply downloaded and processed such that the sky map can be used for generating the astronomic content in the final image. Thus, the accuracy of the realistic final image is improved by the present invention. The astronomic feature information preferably relates to one or more anchor points in the sky but is not limited thereto.

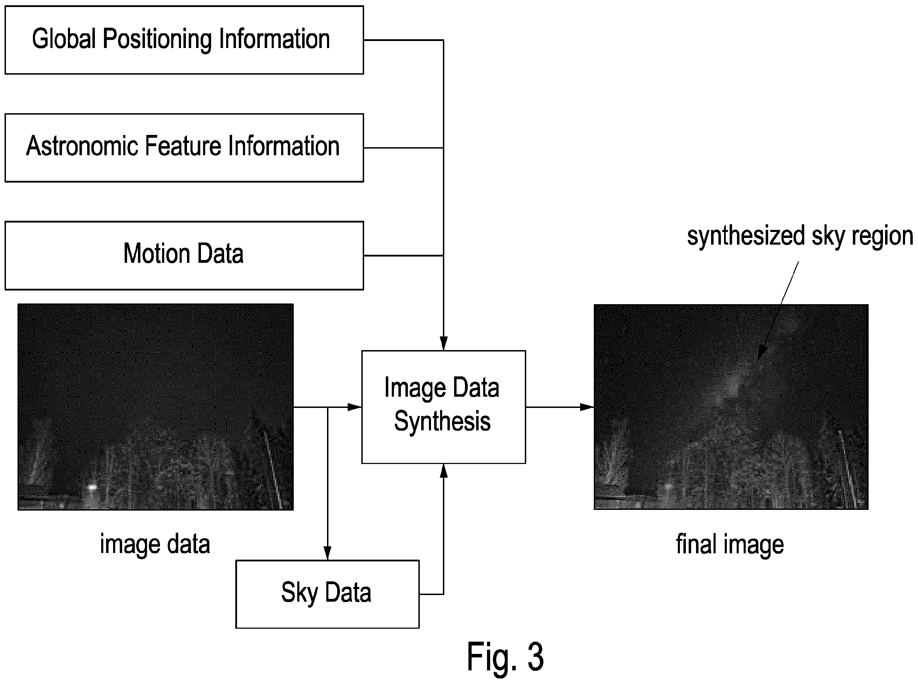

Fig. 3 illustrates a schematic diagram of the method in the present invention in accordance with Fig. 2. Therein, the captured image comprises two regions, namely a sky region in the upper portion of the image and a none-sky region in the lower portion. Accordingly, from the image data of the captured image, the portion of the data that is related to the sky region, or in other words the sky data, can be acquired. Image data synthesis is applied to the image data and the sky data as well as the global positioning information, the astronomic feature information and the motion data as described above. The provided final image comprises a synthesized sky portion in the upper portion thereof which is accordance with the sky region in the captured image.

The final image provided by the image synthesis analysis of the present invention is realistic owing to the astronomic content presented in the synthesized sky region, which can be provided on the basis of, for instance, prestored scientific sky maps. Further, the final image is location- and orientation-specific regarding the position and orientation of the terminal device and thus improves the accuracy and the overall impression of the synthesized sky region.

Further, the image data synthesis block illustrated in Fig. 3 preferably comprises a learning-based algorithm. As is well-known in the art, there are several options available regarding algorithms for providing realistic images with high accuracy. Preferably, a Generative Adversarial Network (GAN) is used to improve the images of galaxies beyond the limits of the traditional image enhancement algorithms. For instance, a model, namely a learning-based network, can be trained on two sets of example images, the first set with high qualities of the pictured objects whereas the second set with intentionally degraded qualities of the same pictured objects. The training can be conducted under different conditions of, for instance, noise level. After training, the learning-based network provides final images recovered from the second set of images with a high accuracy. Thus, by employing such a trained learning-based network in the image data synthesis, accuracy of the final image is further improved. Further, the image data analysis is applied to information from various resources including location of the device, camera orientation, prestored scientific galactic information and etc. such that realistic night star sky imaging contents with high accuracy are efficiently provided.

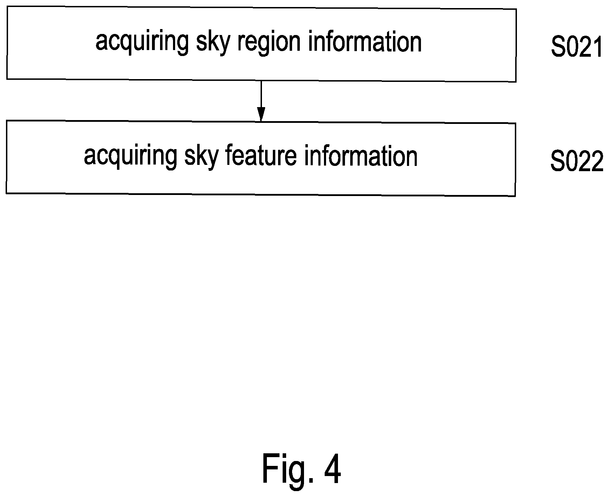

Fig. 4 shows another embodiment of the method in the present invention. Step S02 shown in Fig. 2 further comprises:
Step S021: acquiring sky region information preferably relating to the sky region segmented from the captured image, and/or
Step S022: acquiring sky feature information preferably relating to one or more captured anchor points in the sky region.

In Step S021, the sky data comprises sky region information which relates to the sky region that is segmented from the captured image. Segmentation of the sky region from the captured image can be conducted on the pixel level by labeling each pixel as sky pixel or none-sky pixel. Further, accuracy of the segmentation can be improved by employing a learning-based algorithm. For instance, the determination of sky pixels and none-sky pixels in an image can be implemented by a learning-based network which is trained with a plurality of sample images. On the basis of the sky region information, the content of the synthesized sky region can be generated.

Additionally, or alternatively, Step S022 acquires the sky feature information which is preferably related to one or more captured anchor points in the sky region of the captured image. The captured anchor points preferably refer to, for instance, bright stars like Sirius, Canopus, Arcturus, Vega, Capella and Polaris, or star constellations such as Canis Major, Orion and etc. in the actual night sky, which are captured in the image by the terminal device. The captured anchor points can either be directly acquired from the image data of the captured image, preferably on a pixel level, or acquired from the sky data, preferably on a pixel level. Preferably, the captured anchor points can be directly acquired from the sky region information including only the sky region of the image data. Additionally, the detection of anchor points in the captured image can also be implemented using a learning-based algorithm which thus further improves the accuracy and fidelity of the final image.

As one or more anchor points in the captured image are identified, the method of the present invention further identifies respective target anchor points provided by the astronomic feature information, wherein the target anchor points preferably correspond to the captured anchor points in the captured image. For instance, target anchor points can be identified on a sky map and thus a region on the sky map comprising such target anchor points, namely an on-map sky region, is used by the image data synthesis to generate the astronomic content of the synthesized region in the final image. The on-map sky region can be either independently applied, or used in combination with the segmented sky region as described in Step S021, such that the synthesized sky region is generated.

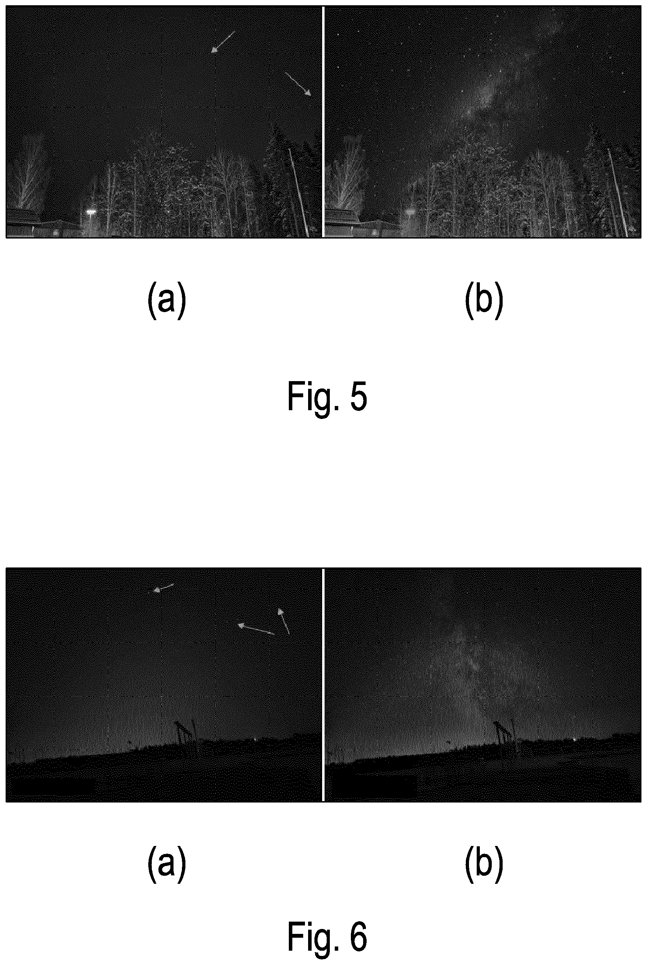

Accuracy of the final image is thus improved due to scientific astronomic data used to generate the synthesized sky region in the final image. For instance, as scientifically plotted and prestored available sky maps are employed, the final images are of higher fidelity as to the astronomic objects presented in the final image. In addition, as the on-map sky region in the sky map comprises target anchor points corresponding to one or more captured anchor points in the captured image, the on-map sky region used in the final image provides a higher accuracy in representing in the final image the scene captured by the device. Referring to Fig. 5, the anchor points in Fig. 5(a) denoted under arrows relate to, for instance, Orion constellation, which are used by the image data analysis of the present invention and provides a highly accurate final image with a realistic presentation of the constellation. Similarly, Fig. 6 shows that the anchor points in the captured image of Fig. 6(a) are used by the image data synthesis of the present invention such that an accurate final image is provided as illustrated in Fig. 6(b).

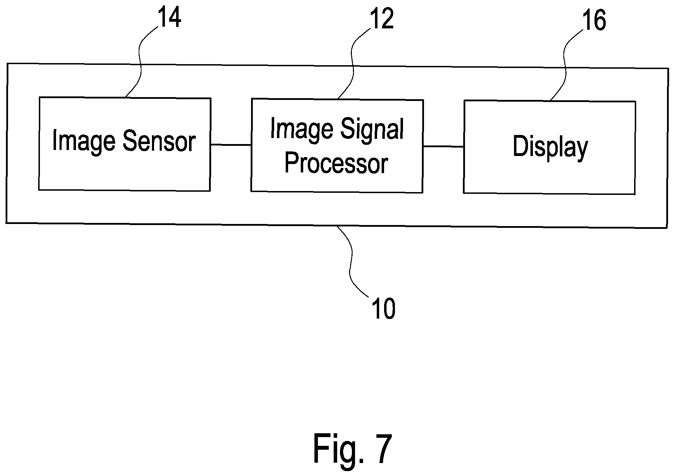

Further, the method of the present invention can be hardware implemented or software implemented. Referring to Fig. 7 showing a terminal device 10 implementing the above described method. Preferably, the method of the present invention is implemented in a processor 12, such as an Image Signal Processor (ISP), or any other equivalent media processor or specialized digital signal processor. Preferably, the processor 10 is connected to an image sensor 14. The image sensor 14 can be a Charge-Coupled Device (CCD) sensor or a Complementary Metal Oxide Semiconductor (CMOS) sensor. By the image sensor 14 initial image data can be acquired, wherein attributes of the light waves are transformed into electrical signals. This initial image data from the image sensor 14 preferably undergoes Analog-to-Digital conversion and then is transmitted to the processor 12 to be processed according to the present invention. Preferably, the processor is further connected to a display 16 to display the final astro-imaging contents. Additionally, or alternatively, a storage device (not shown in Fig. 7) connected to the processor 12 is used to store the images such that the captured images and the respective final astro-imaging contents can be retrieved and displayed later and/or on demand.

Further, the terminal device 10 can comprise, although not shown in Fig. 7, one or more Global Navigation Satellite System (GNSS) type sensors for the acquisition of the global positioning information. The GNSS type sensors further transmit the acquired global positioning information to the processor 12 for further processing. Alternatively, the GNSS type sensors can be separately provided in addition to the terminal device 10 and transmit the global positioning information to the terminal device 10 using wires or in a wireless way. Additionally, or alternatively, a data communication unit is provided in the terminal device 10 or separately in addition to the terminal device 10 for the acquisition and transmission of the rough localization information using at least one of GSMs, WANs, LANs and Internet networks. Further, an inertial measurement unit (IMU) can be provided in the terminal device 10 to obtain the motion data of the terminal device 10 and to further transmit the pose estimation to the processor 12 for further processing. Alternatively, the IMU can also be separately provided in addition to the terminal device 10.

The device 10 can be implemented by any kind of terminal, such as digital camera, smartphone, tablet, laptop or computer or the like. Further, although in Fig. 7 the image sensor 14, the processor 12, and the display 16 are indicated to be implemented in one device 10, the individual modules can be implemented in more than one device and/or in a distributed manner. Thus, the image sensor 14 can be implemented for example in a smartphone for taking pictures. The initial image data acquired by the image sensor 14 then might be transmitted to a server or any other computational device by a communication connection. The server or other computational device may comprise the processor 12 to carry out the method according to the present invention. Then, the final astro-imaging contents may be transmitted to a smartphone, tablet or any other device comprising a display 16 in order to display the final astro-imaging contents. Therein, the final astro-imaging contents from the server or other computational device may be transmitted to the same device that acquired the initial image data or another device. Preferably, the final astro-imaging contents might be stored in a cloud storage and afterwards delivered on demand to a display device to display the final astro-imaging contents.

## Claims

1. A computer-implemented method for digital astro-imaging, preferably implemented in a terminal device and comprising the steps of
acquiring image data of a captured image including a sky region, preferably from a digital camera sensor comprised in the terminal device,
acquiring sky data from the image data,
acquiring global positioning information of the terminal device,
acquiring motion data of the terminal device,
acquiring astronomic feature information, preferably relating to one or more anchor points in the sky, and
applying image data synthesis to the image data, the sky data, the global positioning information, the motion data and the astronomic feature information, such that a final image comprising a synthesized sky region is provided.

2. The method according to claim 1, **characterized in that**
the sky data comprises sky region information relating to the sky region segmented from the captured image.

3. The method according to claim 1 or 2, **characterized in that**
the sky data further comprises sky feature information relating to one or more captured anchor points in the sky region.

4. The method according to any of claims 1 to 3, **characterized in that**
the astronomic feature information is acquired from a sky map, wherein the sky map comprises one or more target anchor points corresponding to the sky data and preferably to at least one of the captured anchor points, such that the synthesized sky region is provided based on an on-map sky region comprising the one or more target anchor points.

5. The method according to any of claims 1 to 4, **characterized in that**
the image data synthesis comprises a learning-based algorithm preferably using Generative Adversarial Networks, GANs.

6. The method according to any of claims 1 to 5, **characterized in that**
the global positioning information is acquired from a global navigation satellite system, GNSS.

7. The method according to claim 6, **characterized in that**
the GNSS comprises at least one of GPS, augmented GPS, GLONASS, BDS, GALILEO and QZSS.

8. The method according to claim 6 or 7, **characterized in that**
the global positioning information comprises rough localization information acquired from data networks.

9. The method according to claim 8, **characterized in that**
the data networks comprise at least one of GSMs, WANs, LANs and Internet networks.

10. The method according to any of claims 1 to 9, **characterized in that**
the motion data comprises pose estimation of the terminal device.

11. The method according to claim 10, **characterized in that**
the motion data is acquired from an inertial measurement unit, IMU.

12. The method according to claim 11, **characterized in that**
the IMU comprises at least one of accelerometers, gyroscopes, compasses.

13. An image signal processor, ISP, configured to carry out the steps of the method according to any of claims 1 to 12.

14. A terminal device comprising an ISP according to claim 13 and a digital image sensor connected to the ISP, wherein the digital image sensor acquires the image data and provides the ISP with the image data.
